# EUROPEAN PATENT APPLICATION

(11) **EP 1 788 515 A1**
(43) Date of publication of application: **23.05.2007**
(21) Application number: 06077056.7
(22) Date of filing: 20.11.2006
(51) Int. Cl.: G06K 19/077, G01R 33/18, G06K 7/08

(54) **Radio frequency identification label**

(30) Priority: 18.11.2005 NL 1030462
(71) Applicant: N.V. Nederlandsche Apparatenfabriek NEDAP, 7141 DC Groenlo (NL)
(72) Inventor: Hogen Esch, Johannes Harm Lukas, 7122 ZN Aalten (NL)
(74) Representative: van Loon, C.J.J.

(57) **Abstract**

A radio-frequency identification label comprising an antenna (2) for picking up an electromagnetic field and an electronic circuit (8) in which identification information may be included, wherein the antenna comprises a magnetostrictive material (3) for converting the electromagnetic field into mechanical vibrations, and a piezoelectric material (4) for converting the mechanical vibrations into an electric signal for supplying the electronic circuit and/or communicating with the electronic circuit.

## Description

This invention concerns a radio-frequency identification label (RFID label).

The known RFID labels, which are used for the identification of persons for the purpose of access control, of animals for the purpose of dairy farm management, and of goods for the purpose of logistic processes, comprise an electronic chip in which information is stored, connected with an antenna with which radio-frequency electromagnetic waves are picked up and transmitted. This antenna is in the form of a dipole antenna or sometimes also in the form of a so-called patch antenna if the frequency of the identification system is in the internationally standardized UHF range of 865-920 MHz or 2.45 GHz range. If the frequency of the identification system is in the likewise internationally standardized VHF range of 13.56 MHz, or in the LF range of 120-135 KHz, this antenna comprises a coil which couples the identification chip with the electromagnetic field of the transceiver with which the information is read out from the identification chip and possibly also written in the identification chip.

Such an RFID identification label is known from applicant's European patent specification EP0576100.

In an international framework, under the auspices of the global standards organization GS1, an EPC (Electronic Product Code) coding system has been developed, analogously to the bar code system with which articles can be coded. The advantage of this EPC coding is that by means of RFID the articles can be read out at some distance without this requiring sight contact.

In order for these EPC codes to be provided on all articles, for instance in a supermarket, a low price for an RFID label is a requisite, which is probably not feasible with silicon chips connected with a coil or a dipole antenna of a material having good electroconductivity.

Recent developments in semiconducting polymer electronics have shown that an RFID identification label made with this technology is within the bounds of possibility and that these semiconducting polymer electronics can be produced with conventional printing or ink jet techniques. However, a major drawback of these polymer electronics is that, firstly, the conductivity of these materials, in proportion to metals, is rather low and, secondly, that the switching frequency of transistors made with semiconducting polymers is much smaller than the switching frequency that can be realized with silicon.

The object of the present invention is to obviate these drawbacks and to provide an RFID label whose electronic circuit contains semiconducting polymer material and/or wherein the coupling with the electromagnetic field of the transceiver is not taken care of by a conventional electric antenna or an electromagnetic coil, but by an element which in impedance and frequency range is better adapted to the semiconducting polymer material.

This element comprises according to the invention a combination of or an integration of a magnetostrictive material and a piezoelectric material. The combination of these two materials results in a "magneto-electric" element that responds to both magnetic and electric fields and can be used for conversion from magnetic to electric field and vice versa.

The combination of these materials is known per se from PCT patent application WO 2004/070408, where it is used in the form of an active element for a sensitive magnetic field sensor. Also, the combination of these materials is known from U.S. Patent 6,835,463, focused on the use of zinc and the application as a magnetic field sensor, as a memory element or as a feedback element for magnetic fields. The application for the purpose of a, for instance passive, RFID label according to the invention has not been described before, as far as is known.

Recent developments in the field of piezoelectric materials and the production thereof provide for a much better electric efficiency, thus allowing the use of a coupling element according to the invention between an electromagnetic field and a circuit of polymer electronics.

The invention will be elucidated further with reference to the drawing. In the drawing:
Fig. 1 shows a schematic of a first example of an embodiment of an identification label according to the invention; and
Fig. 2 shows a schematic of a second example of an embodiment of an identification label according to the invention.

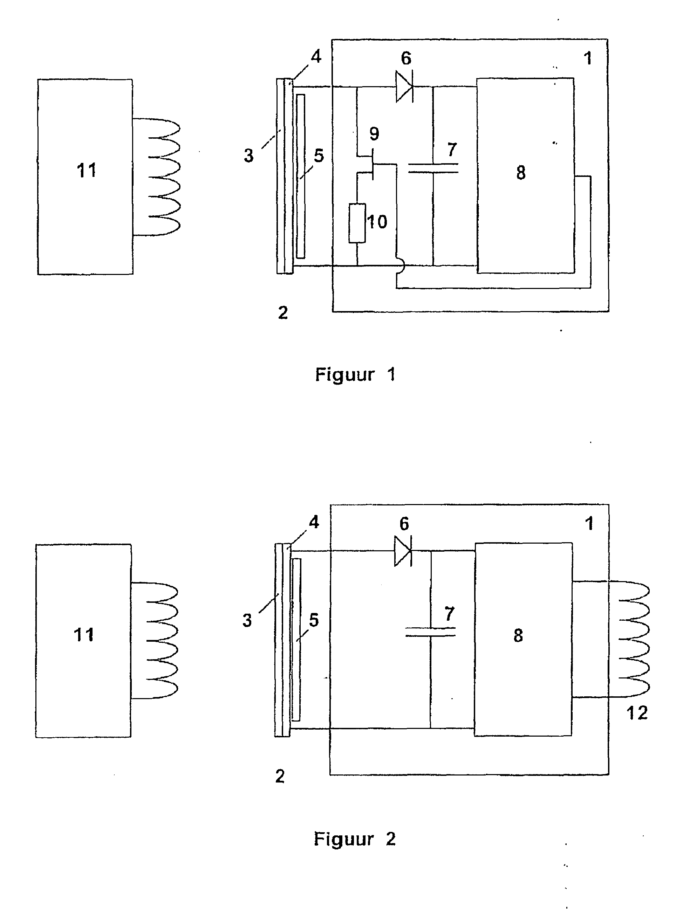

In Fig. 1 and Fig. 2, the RFID label according to the invention is represented schematically with different methods of data transfer.

A circuit (1) has been built in the examples with the aid of semiconducting polymers, utilizing transistors which have been manufactured in multiple layers in a known manner, for instance through ink jet or printing techniques. This circuit receives energy from an electromagnetic field via an antenna element (2), comprising a combination of magnetostrictive (3) material and piezoelectric (4) material. The electromagnetic field in this example is a transmitted field of a transceiver (11) which radiates the transmitted field with a relatively low frequency of, for instance, 60 kHz. In the examples of Fig. 1 and Fig. 2, the magnetostrictive material is designed as a magnetostrictive element and the piezoelectric material is designed as a piezoelectric element. In the examples, the magnetostrictive element abuts against the piezoelectric element. In the examples, the magnetostrictive element is connected with the piezoelectric element.

The magnetostrictive material (3) is going to vibrate mechanically under the influence of the electromagnetic field, and has for instance such dimensions that, together with the piezoelectric element (4), it is going to vibrate with a frequency that is equal to the frequency of the electromagnetic transmitted field. To enlarge the amplitude of the vibration, this vibration will preferably take place at the resonant frequency of the combined materials. To this end, mechanical properties, such as specific weight and stiffness, and/or dimensions, such as length, width and/or height, of an assembly of the magnetostrictive material (3) and the piezoelectric element (4) can be chosen such that a resonant frequency of the assembly substantially corresponds to the frequency of the electromagnetic transmitted field.

To effect the mechanical vibration in the magnetostrictive material, in practice a certain magnetostrictive deformation of the material at rest is an advantage, which can be achieved, for instance, by providing a permanent bias magnetic field over this magnetostrictive material. This can be done with a strip of hard magnetic material or with a strip of plastic or ink mixed together with hard magnetic metal powder, and then magnetized. This is schematically indicated in Fig. 1 and Fig. 2 with magnetic strip (5).

The mechanical vibration of the antenna element (2) is converted via the piezoelectric material (4) into an electric signal, in this example an electric alternating voltage, with the same frequency. This electric alternating voltage is converted in the electronic circuit, in this example the semiconducting polymer circuit (1), by means of diode (6), into a direct voltage (rectified) and the attendant electric charge is stored in a capacitor (7) to serve as supply source for the electric circuit (8).

The identification information that is stored in circuit (8) can be transferred to the transceiver (11) in different known manners, viz.:
- by means of modulated energy absorption via a subcarrier of for instance 20 kHz, as schematically indicated in Fig. 1;
- by having the transmitter transmit intermittently, and in the periods of rest of the transmitter, listening to the modulated after-vibration of the label, which can not or strongly be damped by the polymer;
- by sending a signal back at another frequency and with another antenna, as schematically indicated in Fig. 2.
   As indicated in Fig. 1, the modulated energy absorption takes place through the voltage coming from the piezoelectric material (4) being short-circuited in a known manner using a transistor (9) and a series resistance (10), with the frequency of the subcarrier and a phase, with respect to the frequency of the main carrier, that depends on the content of the identification data. Here, the electronic circuit is thus arranged for modulating absorption of the electromagnetic transmitted field by the antenna element 2. The after-vibration method works with the same modulation form. Here, the electronic circuit is thus arranged for modulating a damping of the after-vibration of the antenna element 2, for instance after the electromagnetic field has been switched off.

In Fig. 2, the data is sent back modulated on a different frequency via antenna (12), which may comprise a coil as indicated in Fig. 2, but possibly also a dipole antenna, a capacitive element or a second combination element of a magnetostrictive and a piezoelectric material.

The frequency of the subcarrier and also the frequency with which the data is transmitted back via another antenna can be derived from the main carrier in a known manner using a simple divider circuit, or possibly also be generated separately for instance using a ring oscillator in the label.

The magnetostrictive material (3) can for instance comprise a strip of amorphous metal which contains an iron/nickel alloy on which, by means of a sputtering technique, a piezoelectric material (4) as for instance lead zirconium titanate is provided.

To obtain a very low-cost RFID label, it is attractive to press or print both the semiconducting polymer electronics (1) and the antenna element (2) on a support of paper packaging material. The printing ink for the antenna element (2) then contains an emulsion of a solvent and amorphous metal powder, which after printing is formed into an amorphous magnetostrictive material (3) by means of sintering, for instance laser sintering, after which in the same manner on top of that a layer of piezoelectric material (4) is provided and a permanently magnetic material (5). Naturally, the order of these layers can also be changed in order to simplify the electrical connection of he piezoelectric material (4) with the semiconducting polymer electronics (1). Also, several layers of the same material may be provided on each other, or alternately, to enhance the desired effects.

## Claims

1. A radio-frequency identification label comprising an antenna for picking up an electromagnetic field and an electronic circuit in which identification information may be included, wherein the antenna comprises
a magnetostrictive material for converting the electromagnetic field into mechanical vibrations, and
a piezoelectric material for converting the mechanical vibrations into an electric signal for supplying the electronic circuit and/or communicating with the electronic circuit.

2. An identification label according to claim 1, wherein the antenna comprises a magnetostrictive element of the magnetostrictive material and a piezoelectric element of the piezoelectric material.

3. An identification label according to claim 2, wherein the magnetostrictive element and the piezoelectric element are mechanically coupled.

4. An identification label according to any one of the preceding claims, wherein the identification label furthermore comprises a magnetic field generator for generating a bias magnetic field in which the magnetostrictive material is, at least partly, situated.

5. An identification label according to claim 4, wherein the magnetic field generator comprises a permanently magnetized element, such as a magnetized hard magnetic metal strip and/or a magnetized strip of plastic or ink mixed together with a hard magnetic metal powder.

6. An identification label according to any one of the preceding claims, wherein the electronic circuit is arranged for rectifying and/or smoothing the electric signal for generating a supply voltage.

7. An identification label according to claim 6, wherein the electronic circuit is provided with charge storage means, such as a capacitor, for storing supply energy.

8. An identification label according to any one of the preceding claims, wherein the electronic circuit comprises semiconducting polymer.

9. An identification label according to any one of the preceding claims, wherein the electronic circuit is arranged for modulating absorption of the electromagnetic field by the antenna.

10. An identification label according to any one of the preceding claims, wherein the electronic circuit is arranged for modulating a damping of an after-vibration of the antenna, for instance after the electromagnetic field has been switched off.

11. An identification label according to any one of the preceding claims, wherein the electronic circuit is arranged for generating a modulated identification signal to be transmitted by the identification label at a different frequency than the frequency of the electromagnetic field.

12. An identification label according to claim 10, wherein the identification label, for the purpose of radiating the identification signal, is furthermore provided with a communication antenna, such as for instance a coil, a dipole antenna, a capacitive element and/or an assembly of a magnetostrictive and a piezoelectric material.

13. An identification label according to any one of claims 9-12, wherein a modulation frequency is derived from a frequency of the electromagnetic field by means of division.

14. An identification label according to any one of claims 9-12, furthermore provided with a frequency generator, such as a ring oscillator, for generating a modulation frequency.

15. An identification label according to any one of the preceding claims, wherein the magnetostrictive material is amorphous.

16. An identification label according to at least claim 2, wherein the antenna is provided with multiple magnetostrictive and/or piezoelectric elements, which are alternately placed against each other.

17. An identification system comprising a transceiver and at least one identification label according to any one of claims 1-16, wherein the transceiver is arranged for generating an electromagnetic field for supplying and/or communicating with the at least one identification label, and for determining an identification of the identification label.

18. A method for manufacturing an identification label, comprising the steps of
- providing an electronic circuit in which identification information may be stored,
- providing a magnetostrictive material,
- providing a piezoelectric material, and
- connecting the piezoelectric material with the magnetostrictive material and the electronic circuit.

19. A method according to claim 18, comprising
- providing a support, and
- pressing and/or printing the electronic circuit, the magnetostrictive material and/or the piezoelectric material on the support.

20. A method according to claim 19, wherein the pressing and/or printing of the magnetostrictive material and/or the piezoelectric material on the support comprises
- pressing an emulsion of a solvent and amorphous metal powder on the support and sintering the emulsion to form a magnetostrictive material and/or piezoelectric material, respectively.

21. A magnetostrictive piezoelectric RFID label, **characterized in that** the transfer of energy from the transceiver to the RFID label takes place with the aid of a combination of magnetostrictive and piezoelectric material, wherein the electromagnetic signal from the transceiver is converted in the magnetostrictive material, under the influence of a bias magnetic field, into a, preferably resonant, mechanical vibration, to be subsequently converted via the piezoelectric material into an electric alternating voltage which after rectification and smoothing is used as energy source for the electronics of the RFID label.

22. A magnetostrictive piezoelectric RFID label according to claim 21, **characterized in that** the electronics of the respective RFID label has been built with the aid of semiconducting polymers, wherein the described method of energy transfer to the label provides for an optimum adaptation to the higher impedance and the lower switching frequency of these polymers.

23. A magnetostrictive piezoelectric RFID label according to one or both of claims 21 and 22, **characterized in that** a bias magnetic field is applied in the form of a magnetized hard-magnetic strip of metal.

24. A magnetostrictive piezoelectric RFID label according to one or both of claims 21 and 22, **characterized in that** a bias magnetic field is applied in the form of a strip of plastic or ink mixed together with a hard magnetic metal powder and which has thereupon been magnetized.

25. A magnetostrictive piezoelectric RFID label according to one or more of the preceding claims 21-24, **characterized in that** the generated and rectified electric charge is stored in a capacitor, so that electric energy is available continuously.

26. A magnetostrictive piezoelectric RFID label according to one or more of the preceding claims 21-25, **characterized in that** the data transfer from the label to the transceiver is realized by means of modulated energy absorption.

27. A magnetostrictive piezoelectric RFID label according to one or more of the preceding claims 21 to 25, **characterized in that** the data transfer from the label to the transceiver is realized by intermittently transmitting and listening to a modulated damping of the after-vibration effect during the pauses of the transmitter.

28. A magnetostrictive piezoelectric RFID label according to one or more of the preceding claims 21 to 25, **characterized in that** the data transfer from the label to the transceiver is realized at a different frequency than the frequency with which the energy transfer takes place.

29. A magnetostrictive piezoelectric RFID label according to claim 28, **characterized in that** this data transfer takes place with the aid of a coil.

30. A magnetostrictive piezoelectric RFID label according to claim 28, **characterized in that** this data transfer takes place with the aid of a dipole antenna.

31. A magnetostrictive piezoelectric RFID label according to claim 28, **characterized in that** this data transfer takes place with the aid of a capacitive element.

32. A magnetostrictive piezoelectric RFID label according to claim 28, **characterized in that** this data transfer takes place with the aid of an element which likewise comprises a combination of a magnetostrictive and a piezoelectric material.

33. A magnetostrictive piezoelectric RFID label according to one or more of the preceding claims 21-32, **characterized in that** the modulation frequency is derived from the main carrier by means of division.

34. A magnetostrictive piezoelectric RFID label according to one or more of the preceding claims 21-33, **characterized in that** the modulation frequency is generated in the label, for instance with the aid of a ring oscillator.

35. A magnetostrictive piezoelectric RFID label according to one or more of the preceding claims 21-35, **characterized in that** the magnetostrictive material is amorphous.

36. A magnetostrictive piezoelectric RFID label according to one or more of the preceding claims 21-35, **characterized in that** the energy transfer element, to enhance the effect, comprises multiple identical layers.

37. A magnetostrictive piezoelectric RFID label according to one or more of the preceding claims 21-36, **characterized in that** this label is built on a support with the aid of pressing or printing techniques.
